(19) **Europäisches Patentamt**

**European Patent Office**

**Office européen des brevets**

(11) Numéro de publication: **0 248 136**
**A1**

(12) **DEMANDE DE BREVET EUROPEEN**

(21) Numéro de dépôt: **86401108.5**

(22) Date de dépôt: **26.05.86**

(51) Int. Cl.⁴: **B60B 19/00 , B62M 23/02**

Dans la troisième revendication se trouvent quelques mots illisibles. Cette partie a été indiquée par des caractères spéciaux.

(43) Date de publication de la demande:
**09.12.87 Bulletin 87/50**

(84) Etats contractants désignés:
**AT BE CH DE GB IT LI LU NL SE**

(71) Demandeur: **Vennettilli, Giancarlo**
**25, avenue Louis Blériot**
**F-94400 Vitry S/Seine(FR)**

(72) Inventeur: **Vennettilli, Giancarlo**
**25, avenue Louis Blériot**
**F-94400 Vitry S/Seine(FR)**

(54) **Système de roues â aubes pour cycles et voitures hyppomobiles.**

㊄ L'invention concerne un dispositif permettant d'augmenter légèrement la vitesse des cycles et des voitures de trait léger de course notamment.

Il est constitué d'aubes (K) mobiles pivotant autour d'un axe (S) pouvant être constitué par les rayons des roues de cycles. Lorsque l'air vient les heurter en V1 et V2 elles s'ouvrent et servent de réceptacles à air (ou à vent) dans la partie inférieure de la roue. Les aubes se ferment dans la partie supérieure de la roue protégée par un cache brise-vent ainsi que les oblige l'air arrivant alors en (T) du côté opposé à celui frappé par le vent en V1 et V2.

Le dispositif selon l'inventioon est particulièrement destiné aux cycles et voitures hippomobiles de course.

Coupe A-A · VUE DE FACE

**EP 0 248 136 A1**

## Dispositif pour diminuer l'action de l'air et augmenter la force des roues de cycles et de voitures hippomobiles de course.

La présente invention concerne un dispositif de roues à aubes articulées pour cycles et attelages hippiques légers avec brise-vent.

Traditionnellement il n'existe que des systèmes et dispositifs à rayons sans protection aucune du vent ou tout au plus un cache en papier, peau ou matière plastique posé à même les rayons mais en aucun cas la force du vent ou simplement de l'air n'est utilisée.

Le dispositif selon l'invention permet de diminuer d'une part la résistance de l'air et d'autre d'utiliser celle-ci. Il comporte notamment un cache surplombant et recouvrant la moitié supérieure de la roue ainsi que des aubes placées sur les rayons de la roue (ou sur les bâtons le cas échéant pour les roues à bâtons) et articulées au centre par où passe le rayon de façon à pouvoir s'ouvrir et se fermer en fonction de leur position.

Selon une forme de réalisation préférentielle, le rayon constitue l'axe autour duquel se meuvent les aubes. Celles-ci constituées de deux parties mobiles se fermant incomplètement (à 30° environ) étant retenues par des butées internes et s'ouvrant incomplètement (à 170° environ) retenues par des butées externes.

Ainsi lorsque tourne la roue munie de ce dispositif, les aubes arrivant à la moitié supérieure de la roue -donc sous le cache-se fermeront puisque l'air viendra frapper les côtés externes de celles-ci: de ce fait elles offriront d'autant moins de résistance à l'air qu'elles exécuteront la moitié de leur course dans la moitié supérieure de la roue obturée par un cache brise-vent. En gagnant à leur sortie du cache la moitié inférieure de la roue, l'air s'engouffrant dans la partie interne fera s"ouvrir l'aube et de ce fait en formera un réceptacle à air augmentant ainsi la force de la roue.

Ces aubes peuvent être réalisées en matière plastique, en peau ou en métal très léger. Le cache brise-vent peut être réalisé par le garde-boue de la roue s'il en existe, sinon par une tige métallique ou en matière plastique rigide surplombant la roue et dont il épouse la forme et d'autre part les côtés droit et gauche de celui-ci peuvent être rélaisés en matière plastique souple et légère ou en peau voire en métal très léger.

Dans la coupe A-A on peut voir la roue de côté, selon l'invention. Cette figure représente également la roue vue de face. D indique la direction du véhicule, V la direction du vent (ou de l'air) H soit le garde-boue soit la tige support du cache brise-vent, Y le support du dit cache du moyeu de la roue au garde-boue (ou le cas échéant tige de support) J le flanc du cache en matière plastique par exemple R la sens de rotation de la roue, M le moyeu, U le pneu, K les aubes sont s'agit , S l'axe (en l'occurrence les rayons) autour duquel elles se meuvent, E les butées, A (sur le vue de face) l'axe de la roue elle-même. Sur la vue de face l'on peut voir les aubes ouvertes en bas et fermées en haut.

-Selon un autre dispositif, les aubes ne sont représentées que par des palettes uniques (au lieu de doubles battants) et articulées par un axe également vertical mais placé non au centre mais à l'extrêmité droite ou gauche de chaque palette.-

-Selon un autre type de dispositif encore, les aubes sont articulées par des axes non plus verticaux mais latéraux ou bien constituées en matière souple et flexible assurant ainsi quasiment le même résultat que des articulations sur axes verticaux ou latéraux.-

Les figures dites "Coupe C-C" et "COupe B-B" explicitent plus amplement le fonctionnement des aubes, ouvertes en "Coupe C-C" fermées en "Coupe B-B", vues de plan dans un cas comme dans l'autre.

Le vent (ou simplement l'air) vient heurter en V1 et V2 les aubes s'ouvrant en direction P lorsque celles-ci sont en moitié inférieure de la roue hors du cache et viennent au contraire se fermer en"cqupe B-B" par l'air frappant alors en T lorsque les aubes se trouvent en partie supérieure de la roue donc sous le cache.

Le dispositif selon l'invention est particulièrement destiné aux cycles et aux voitures hippomobiles de course.

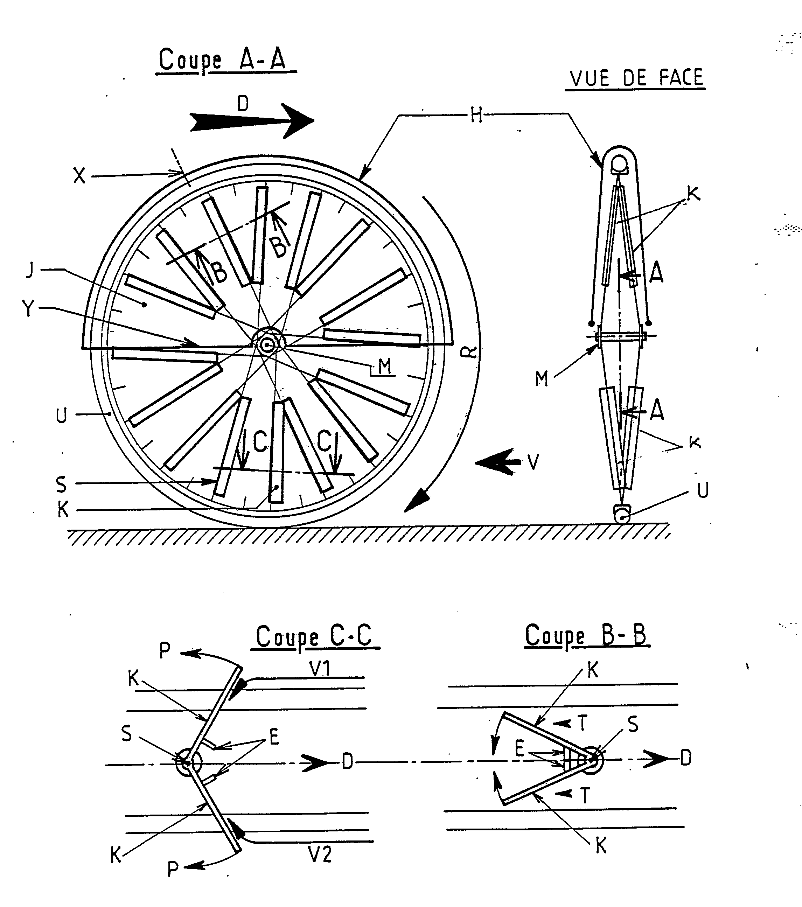

## Revendications

1/ Dispositif pour briser la résistance du vent en l'utilisant pour augmenter la vitesse sur les cycles et véhicules hippomobiles de course caractérisé en ce que les roues sont munies d'aubes mobiles à double battant pouvant s'ouvrir et se fermer en pivotant autour d'un axe central (rayon en l'occurrence) telles que représentées sur la figure: aubes (K) axe central (S) moyeu (M) sens de rotation de la roue (R) butées (E) direction du vent (ou de l'air) (V) pneu (ou cerclage métallique pour véhicule hippomobile) (U) . Les roues sont pourvues d'un cache en matière plastique, cuir, ou métal léger en leur moitié supérieure de façon à protéger de l'air ou du vent négatif en cette partie de la roue: le garde-boue ou la tige servant de support audit cache représenté sur la figure (H) a un support des deux extrêmités de celui-ci au moyeu de la roue (Y) et un flanc de part et d'autre de la roue (J).

2/ Dispositif selon la revendication 1 caractérisé en ce que les aubes ne sont reprsentées que par des palettes uniques (au lieu de doubles battants) et articulées par un axe également vertical mais placé non au centre mais à l'extrêmité droite ou gauche de chaque palette.

3/ Dispositif selon la revendication 1 ou 2 caractérisé an ce que les aubes sont articulées par des axes non plus verticaux mais latéraux ou bien sont constituées de matière souple et flexible assurant ainsi quasiment le même résultat que des axes (■■■■■■■■■■■).

**Coupe A-A**

VUE DE FACE

**Coupe C·C**

**Coupe B-B**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | DE-C- 59 251 (F. KLEINAU)<br>* En entier *<br><br>--- | 1 | B 60 B 19/00<br>B 62 M 23/02 |
| Y | CH-A- 185 327 (MASCHINENFABRIK GRÄNICHEN AG)<br>* En entier *<br><br>--- | 1 | |
| A | BE-A- 900 389 (P. DERYCKE)<br>* Figures; page 2, lignes 1-11 *<br><br>--- | 1 | |
| A | DE-C- 92 737 (C.H.O. VÖLCKNER)<br>* En entier *<br><br>--- | 1 | |
| A | FR-A- 345 875 (T.J. DEAN)<br>* En entier *<br><br>----- | 1 | DOMAINES TECHNIQUES RECHERCHES (Int. Cl.4)<br><br>B 60 B<br>B 62 B<br>B 62 C<br>B 62 J<br>B 62 M<br>B 62 K |

Le présent rapport de recherche a été établi pour toutes les revendications

| Lieu de la recherche | Date d'achèvement de la recherche | Examinateur |
|---|---|---|
| LA HAYE | 02-02-1987 | FRANKS B.G. |